(19) Europäisches Patentamt

European Patent Office

Office européen des brevets

(11) **EP 0 898 242 A1**

(12) **EUROPEAN PATENT APPLICATION**

(43) Date of publication:
24.02.1999 Bulletin 1999/08

(51) Int. Cl.$^6$: **G06K 11/18**, G06K 11/08

(21) Application number: **97306205.2**

(22) Date of filing: **15.08.1997**

(84) Designated Contracting States:
**AT BE CH DE DK ES FI FR GB GR IE IT LI LU MC NL PT SE**
Designated Extension States:
**AL LT LV RO SI**

(71) Applicants:
• **Yeh, Fu-Kuo**
  **Shih-Lin District, Taipei (TW)**
• **Chen, Mei-Yun**
  **Shih Lin District, Taipei (TW)**

(72) Inventors:
• **Yeh, Fu-Kuo**
  **Shih-Lin District, Taipei (TW)**
• **Chen, Mei-Yun**
  **Shih Lin District, Taipei (TW)**

(74) Representative:
**Prentice, Raymond Roy**
**Calvert's Buildings,**
**52B Borough High Street**
**London SE1 1XN (GB)**

(54) **Cursor controlling device**

(57) A cursor controlling device for controlling the movement and positioning of a cursor on a computer display comprises a case (1) consisting of an upper part (11) and a lower part (12) with a cavity (13) formed therebetween, an information carrier set (2) within the case and having at least two information carriers (21, 22) for recording information signals used to identify "0" and "1" so as to match the two dimensional movement of the X axis and Y axis, a reading set (3) installed within the case for coupling with the information carriers to derive the signals of "0" and "1" and a sliding bar set (4) having at least X axis and Y axis sensor sets for driving said information carriers (21, 22) respectively. The information carriers are installed within the cavity (13) of the case (1) and each of the information carriers has a driving portion (211, 221) which is arranged to be driven by a respective sliding bar set (41, 42) whereby the assembled volume of said cursor controlling device may be reduced to a minimum value so that the cursor controlling device may be moved with a very small area to control the movement of a cursor moving the display. The sliding bar set and the information carrier set may be rotated within a suitable angle to fit operation by the human hand. The cursor controlling device according to the invention can have two operating modes wherein, in the first operating mode, movement of a finger controllable element is detected, and then the cursor is moved correspondingly while, in the second operating mode, a virtual pointer area is installed so that as the finger controllable element is moved into this area, it is automatically converted into the operation of a specified instruction to perform a bidirectional movement containing at least a scrolling operation, or it may be separated specially to increase a function in which the cursor may arrive at the boundary of the display. Thus, the moving area of said control device may be designed to be within an area of about 1.27 cm and it may be mapped into the whole display by absolute coordinates.

FIG. 2

## Description

This invention relates to a cursor controlling device and to a method of operating the same. The cursor controlling device according to the invention may be installed on a wireless remote controller, and said controller may be operated by a thumb so as to match the requirements of ergonomics. The moving range of the cursor controlling device is desirably within a range of approximately 1.27 cm (0.5 inch) and the operation may be mapped to the whole screen by using an absolute coordinate method (pixel to pixel) as well as programming the operation of automatic scrolling and performing the function of fast arriving at the boundary. The cursor controlling device according to the present invention may be used in keyboards, remote controllers, the operating panels of notebook computers or in mice.

Since the current computer software is more and more perfect, the operation space of the user will not be confined with a single screen. More and more software is quipped with virtual display and they are widely used, such as in the environment of Windows 95 and Intel surveyor that has used the virtual display screen. The conventional mouse is not suited to use in this brand-new environment. In normal operation, the virtual display screen is larger than the practical screen by 9-12 times and the operation is more apparent when it is used in the Intel surveyor. Since the prior mouse is moved slowly, it will not match the requirements of the surveyor and thus a technology for installing a scrolling key is generated, such as in U.S. Patent No. 5539455 in which Z axis is used to scroll the virtual display, in operation the Z axis being rotated continuously by the finger or in U.S. Patent No. 4782328 in which a finger controllable element is applied to resist against the right and left boundaries to the upper and lower boundaries, thus the virtual display will move leftwards and rightwards, or upwards and downwards, and according to the retaining time that the finger controllable element will resist against the boundaries to increase the scrolling speed. However the drawback of such a design is that as the reversing scrolling is performed each time, the cursor must move across the display to another boundary. Thus the operation needs too much time and has no efficiency. In another design, the middle key of a mouse is clicked to generate a global instruction to move the whole display. In performing, the middle key is clicked to convert into the operation of scrolling display, ad a further clicking will cause the operation to return to the operation of controlling the movement of the cursor. Therefore, in using these prior art devices, the finger must rotate a rolling wheel or click the keys continuously. This is not a convenient operation and will not match the increasing requirements of current software.

Further, in the prior art, the position is detected by a rolling ball or a coded wheel, thus when some software programs are performed, it is possible that the cursor will drift and it is not easy to position and it is often needed to move the mouse by hand. U.S. Patent Nos. 4782327 and 4935728 disclose an absolute coordinate controlling method roughly to solve the cursor controlling in coordinates. However, the structure in these designs is larger, and they must match with a complicated flow diagram and circuit interface so as to attain the object of cursor controlling, thus in practice, it still has some disadvantages and is in need of improvement.

As shown in Fig. 1 of the drawings, U.S. Patent No. 4935728 has disclosed an absolute coordinate structure, in which the X axis and Y axis optic grid pieces are shifted transversely and straightly and a sufficient distance is needed for the readable bright and dark lattices. In the structure, the X axis and Y axis are moved within a fixed track, for example, if being pushed transversely, they are pointed to the X axis, and if being pushed upwards or downwards, they are pointed to the Y axis, thus in usage, the structure must be positioned in the right position for matching operation by the human hand. Once in operation, if the structure is shifted and the human hand is not shifted correspondingly, then if a hand is purely moved along the X axis, it is possible that the cursor does not move along the X axis. In practice, the cursor is moved along an inclined line between the X axis and Y axis and this leads to an error in operation.

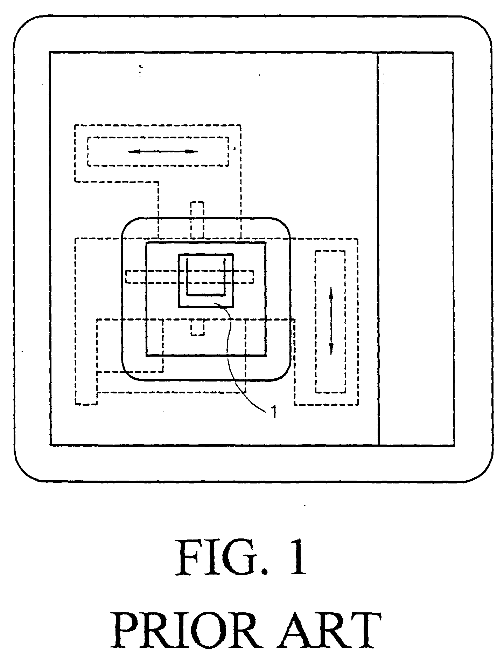

Further, in the firmware design, as the finger controllable element is performed, the absolute coordinate movement is attained by two operation modes. As shown in Fig. 1, when the cursor is moved with a low speed v1, there is a fine operation mode in which a fine displacement may be obtained from the absolute position on the display (pixel by pixel) while if the cursor is moved with a high speed v2, the display distance with respect to each bright and dark lattice is obtained from dividing the surplus distance beside the fine operation mode by the surplus bright and dark lattices beside the movement of optic grid pieces. However, it is possible that the resultant value will not be an integer so that calculation is inconvenient. Moreover, such a structure is not used in all kinds of display, i.e. different hardware is needed to match with different resolution, otherwise, in operation, the cursor will jump apparently. For example, a 320 points absolute coordinate structure is applied to a 640 points display, then the cursor will only move one half of the display and, in the boundary, the front 310 points, the cursor will directly jump to another boundary of said screen, thus the cursor will not be positioned. Similarly, if the structure is used in an 800 or 1280 points display, the defect is more apparent. Therefore, in order to overcome such a problem, it is needed to enlarge the original structure, but this will further increase the volume of original structure which has occupied a large volume, thus the operation will become inconvenient. Consequently, in such a design, different resolution will match with different structure, the generality is poor and it is not accepted by users.

Moreover, if this prior absolute structure is used to perform scrolling of a virtual display, it is very inefficient. In operation, the cursor must run across the display to the boundary for scrolling if a right scrolling is needed to be performed, the cursor must again move across the display to the rightmost side. On the other hand, if a left scrolling is needed to be performed, the cursor must again move across the display to the original side. As a whole, the process wastes too much time and has poor efficiency.

The present invention aims to provide a cursor controlling device which overcomes the above-mentioned disadvantages.

According to the invention, there is provided a cursor controlling device for controlling the movement and positioning of a cursor on a computer display, characterised in that the cursor controlling device comprises a case consisting of an upper part and a lower part with a cavity being formed therebetween; an information carrier set within said case and having at least two information carriers for recording information signals used to identify "0" and "1", so as to match the two dimensional movement of the X axis and Y axis; a reading set installed within the case for coupling with the information carriers to derive the signals of "0" and "1"; and a sliding bar set having at least X axis and Y axis sensor sets for driving said information carriers respectively; said information carriers being installed within the cavity of the case and each of said information carriers having a driving portion which is arranged to be driven by a respective sliding bar set whereby the assembled volume of said cursor controlling device may be reduced to a minimum value so that the cursor controlling device may be moved with a very small area to control the movement of a cursor moving the display, and said sliding bar set and said information carriers are rotated within a suitable angle to fit operation by the human hand.

The cursor controlling device according to the invention may be installed on a keyboard, remote controller, the operating panel of a notebook computer or a mouse.

The information carriers may take the form of optic grid pieces, magnetic discs, magnetic tapes, optical discs, touch pads, optical shift reflectors or a combination of said media to match with the related reading set. However, in order to conveniently describe the present invention, optical grid pieces are discussed as an example, thus components and processing of the present invention will be described in detail.

The present invention also provides a method of controlling the movement and positioning of a cursor on a computer display utilising the cursor controlling device above referred to in which the case constitutes a finger controllable element and at least one information carrier and respective reading set are arranged to generate the signals "0" and "1" to read the moving information of the finger controllable element, at least one register being provided to generate the value of "0" and "1", said method having a first operating mode to detect the movement of said finger controllable element and to cause the cursor to move respectively on the display and a second operating mode in which an enlarged virtual pointer area is created so that when the finger controllable element is moved into this enlarged area, it may be converted into the operation of instructions so that at least a bidirectional movement containing scrolling of the display is performed.

Preferably, the separation of the two operating modes is the compressed boundary respectively installed on bright and dark lattices of the optic grid pieces. If the finger controllable element is moved within said boundary, the operation is in the first operating mode; otherwise, the operation is in the second operating mode. When the finger controllable element is moved into the second operating mode, at least two operations of specified instructions may be performed, one of which is automatically converted into the scrolling of the display screen, and the other operation is to arrive at the virtual screen boundary quickly.

According to a preferred method of the present invention, the operation may be further programmed so that when the finger controllable element is entered into the boundary of the X axis and Y axis from the upper, lower, left and right directions, the operation is entered into the second operating mode, thus the operation is converted into the scrolling of control rod. If after the finger controllable element has entered into the boundary and then it is moved nearly vertically to the boundary of the X axis and Y axis, then the operation is converted into the mode of arriving at the boundary quickly. Therefore, by such a design, the present invention may be used in different displays with different resolutions, and the operations of scrolling and page changing has preferred effects, thus the converting speed and operation speed of the finger controllable elements of the present invention are completely matched with that in the current virtual display software.

The invention will now be described in detail, by way of example, with reference to the drawings, in which:-

Fig. 1 is a plan view of an absolute coordinate construction according to the prior art;

Fig. 2 is an exploded perspective view of one embodiment of a cursor controlling device according to the present invention;

Fig. 3 is a perspective view showing the cursor controlling device illustrated in Fig. 2 in an assembled condition;

Fig. 4 is a vertical section through the assembled cursor controlling device shown in Figs. 2 and 3;

Fig. 5A is a perspective view showing the cursor controlling device installed in a remote controller;

Fig. 5B is a side elevation of the remote controller shown in Fig. 5A;

Fig. 6 is an exploded perspective view of a second embodiment of a cursor controlling device according to the present invention;

Fig. 7 is a perspective view showing the cursor controlling device illustrated in Fig. 6 in a partially assembled condition;

Fig. 8 is a vertical section through the assembled cursor controlling device shown in Figs. 6 and 7;

Fig. 9 is an exploded perspective view of a third embodiment of a cursor controlling device according to the present invention;

Fig. 10 is a plan view of the cursor controlling device shown in Fig. 9;

Fig. 11 is an exploded perspective view of a fourth embodiment of a cursor controlling device according to the present invention;

Fig. 12 is a circuit diagram of a cursor controlling device according to the present invention;

Fig. 13 is a schematic view showing a finger controllable element of the present invention with respect to the moving of the display cursor;

Fig. 14 is a schematic view of a remote controller for screen scrolling in a second operating mode of the present invention;

Fig. 15 is a schematic view of a remote controller illustrating the operation of quickly arriving at a boundary in the second operating mode of the present invention;

Figs. 16A-16I are flow diagrams illustrating a first operating mode of a cursor controlling device according to the present invention;

Fig. 17A is a schematic view to an enlarged scale of an optic grid forming part of a cursor controlling device according to the present invention;

Fig. 17B shows the respective signals of light and dark lattices obtained from the optic grid shown in Fig. 17A; and

Fig. 18 is a flow diagram illustrating a second operating mode of a cursor controlling device according to the present invention.

In the drawings, like parts are denoted by like reference numerals.

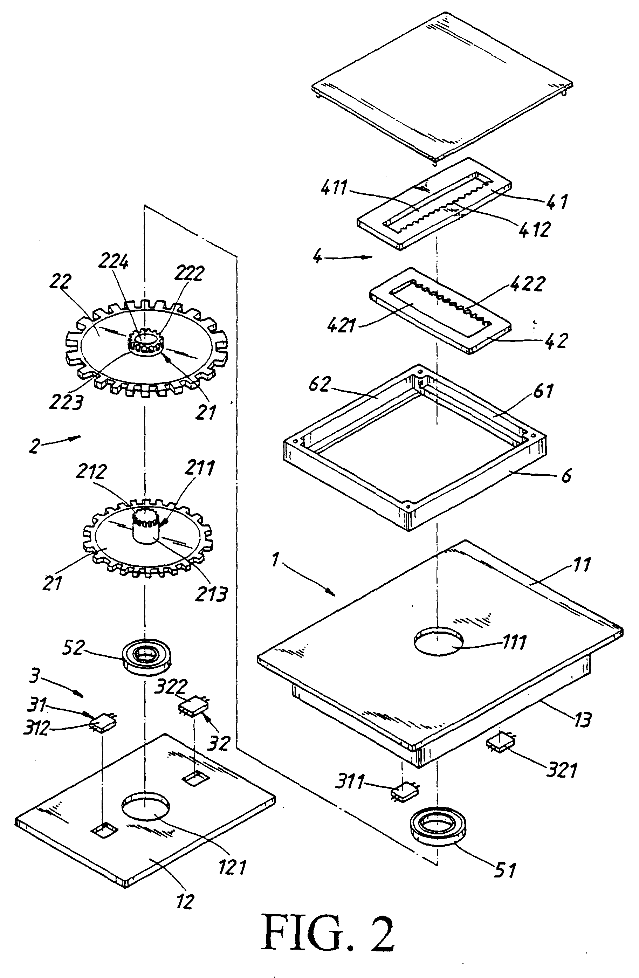

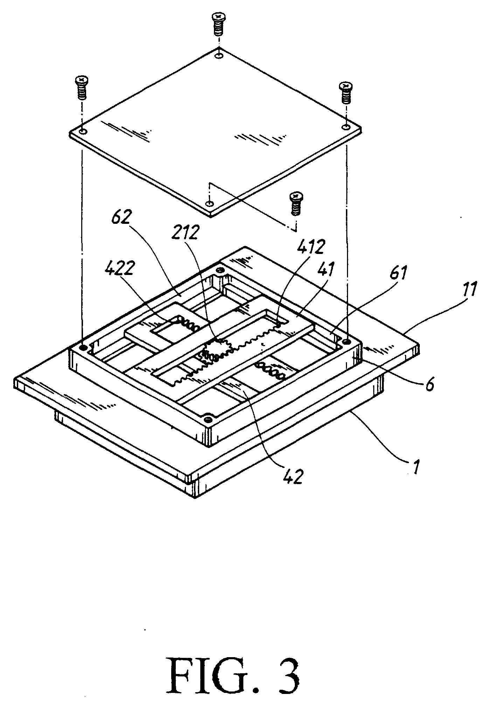

Reference will first be made to Figs. 2-4 of the drawings which show a cursor controlling device according to the present invention which may be used in keyboards, mice, remote controllers and other manual controlling means. The cursor controlling device includes a case 1 which can be used as a finger controllable element, and the movement and positioning of the cursor on the display being controlled through a controlling circuit. The case 1 comprises an upper part 11 and a lower part 12, a container 13 extending from the face of the part 11 which is intended to mate with the lower part 12 to define a cavity. An optic grid set 2 is installed within the case 1 and comprises at least two optic grids 21 and 22, a plurality of bright and dark lattices being installed on each of the optic grid pieces 21 and 22, which is sufficient to match the requirement of two dimensional movements of X axis and Y axis. An optic sensing set 3 is also installed within the case 1 and comprises at least two sensor sets 31 and 32 each of which has at least an illuminated portion 311 or 321 respectively, and a receiving portion 312 or 322, respectively, said two portions being buried on the upper and lower sides of said upper and lower parts 11 and 12 with respect to said optic grid pieces 21 and 22 for reading the bright and dark messages. A sliding bar set 4 having at least an X axis and a Y axis sensor set 41 and 42 for driving said optic grids 21 and 22, respectively, is also installed within the case 1.

The optic grid is serially connected on the container 13 of the case 1 actively. The optic grid 21 has a small gear 212 the lower part of which has a long shaft 213 extending from one side and a short shaft 214 extending from the other side while the other optic grid 22 has a larger gear 222 the lower part of which has a short shaft 223 and a through hole 224 for receiving the long shaft 213 on said optic grid 21. The short shaft 214 and short shaft 223 are mounted in bearings 51 and 52, respectively, which bearings are located in penetrating holes 111 and 121 provided respectively in the upper and lower parts 11 and 12 of the case for assembling the whole optic grid set 2. In assembling, the small gear 212 and large gear 222 which form parts of a driving portion 211 and 221 respectively of the two optic grids 21 and 22 may be installed outside the upper part 11 so as to connect with the sliding bar set 4. The X axis sensor 41 has a slot 411 provided along one side with a rack 412 for engaging with the smaller gear 212 while the Y axis sensor has a wider slot 421 provided along one side wall with a rack 422 for engaging with the larger gear 222. In consequence, the distance measuring portions of the X axis and the Y axis of the whole device may be overlapped within the case 1 with a minimum area and volume.

Since the gears 212 and 222 as well as the circular optical grids 21 and 22 have different circumferences, when they are driven, the optic grids 21 and 22 may have amplified effects with respective ratios, thus no matter how small the gears 212 and 222 are compressed, sufficient positions for installing bright and dark lattices are sustained on the periphery of said optic grids 21 and 22, while according the current clock techniques. The gears 212 and 222 as well as the sensor sets 41 and 42 may be compressed within the range for easily locating said bright and dark lattices so that the distance measuring portions of the X axis and Y axis of the whole device may occupy a minimum volume within said case 1. Therefore, the hardware structure of the product is compressed apparently for matching the compact requirement.

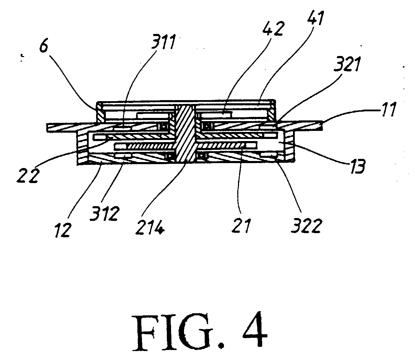

Shown in Figs. 2 and 4 are the controlling device of the present invention, the optic grid set 2 with said case 1 is assembled as an overlapping device, thus it has only one centre (i.e. the position locating the long shaft 213), in order that the overlapped height may be reduced to a minimum value, the widths of the optic grid 21, 22 and the gears 212 and 222 installed thereon may be designed to be very thin. The reading of bright ad dark lattices on said closed optic grids is a difficult problem but, in the present invention, said bright and dark lattices on the optic grids 21 and 22 are arranged at different circumferences and interleaved with each other and the inside of the large optic grid 22 is transparent. Accordingly, when the receiving portion 312 and illuminating portion 311 of the optic crystal set 31 on the sensor set 3 are installed on the upper and lower sides of said case 1, respectively, only the bright and dark lattices on the optic grid 21 are read, while the receiving portion 322 and illuminating portion 321 of the sensor set are associated with the bright and dark lattice portions of said optic grid 22. During reading, the illuminating portion 321 emits the optic grid and the light is penetrated therethrough so as to illuminate the optic grid 22, and then the receiving portion receives the penetrating light, therefore, the moving message may be read in the close condition. Besides, the sensor sets 31 and 32 may be selected to be arranged in a position orthogonal to the case 1 so as to save space so that the product volume may be further reduced.

A substantially rectangular frame 6 is mounted on the outer face of the upper part 11 of the frame 1 and two opposite sides are provided with sliding grooves 61 parallel to the X axis, while the other two sides are provided with sliding grooves 62 parallel to the Y axis so that the sliding bar 4 can be slid within said sliding grooves 61 and 62. In operation, when the frame 6 is moved, the gears 212 and 222 may be rotated by movement of the racks 412 and 422 of the sliding bar set 4 and, in consequence, the optic grids 21 and 22 are rotated and read by the sensor sets 31 and 32 so that the control circuit may measure the moving distance and direction. The read message is transferred to the computer in order that the cursor on the display may induce a corresponding movement. Since the structure of this embodiment is compact, the assembled volume of the cursor controlling device may be further reduced and the cursor on the computer display is controlled within a small area since a user's hand holds only the frame portion 6, or the whole frame is located within the disc for moving the case 1, while the whole case 1 is assembled by gears 212 and 222 as well as the sliding bar set 4, therefore, the sliding bar set 4 may match the optic grid set 2 with each other so as to rotate to any angle and to suit the user's hand whereby fault displacement induced by an incorrect hand pose in the prior art is prevented. Moreover, since the whole device is protected by a compact enclosure, dust and water is prevented from entering the case.

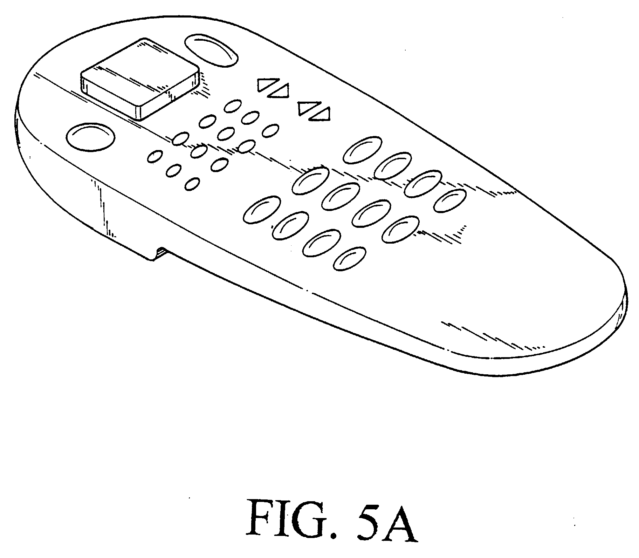

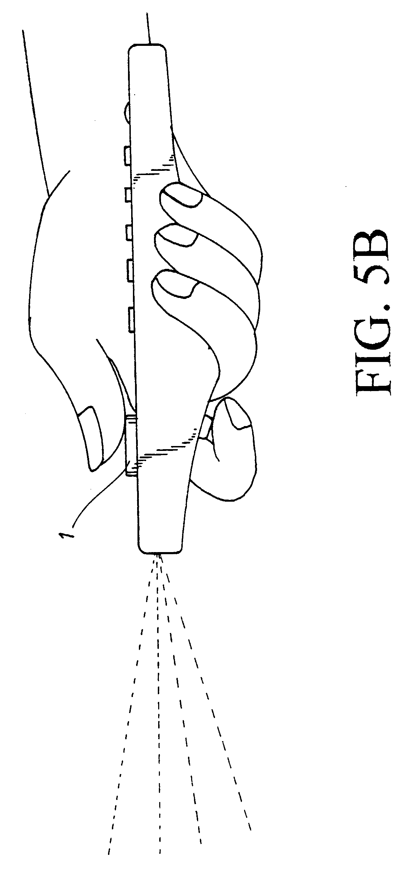

As shown in Fig. 5A, the device of the present invention is operated with the firmware thereof, said finger controllable element may be installed on keyboards, remote controllers, the operating board of portable computers, mice or other products, wherein the cursor controlling device of the present invention may be moved within an area with a length of 1.27cm (0.5 inch). In such a very small range, the finger controllable element is well programmed. Basically, the present invention uses an absolute coordinate (pixel - pixel) to map the whole screen, and still has space for automatically scrolling and for the cursor to move to the boundary as will be described hereinafter. Thus, the present invention may be installed on a wireless remote controller with a minimum volume. As shown in Fig. 5B, one face of this remote controller is installed with the minimum finger controllable element of the present invention for operating by hand, and the lower side of the remote controller is provided with an input key for operating by the user. Such a design matches the requirements of ergonomics, so that the controller may suit the further development involving the combination of multi-media computers and TV.

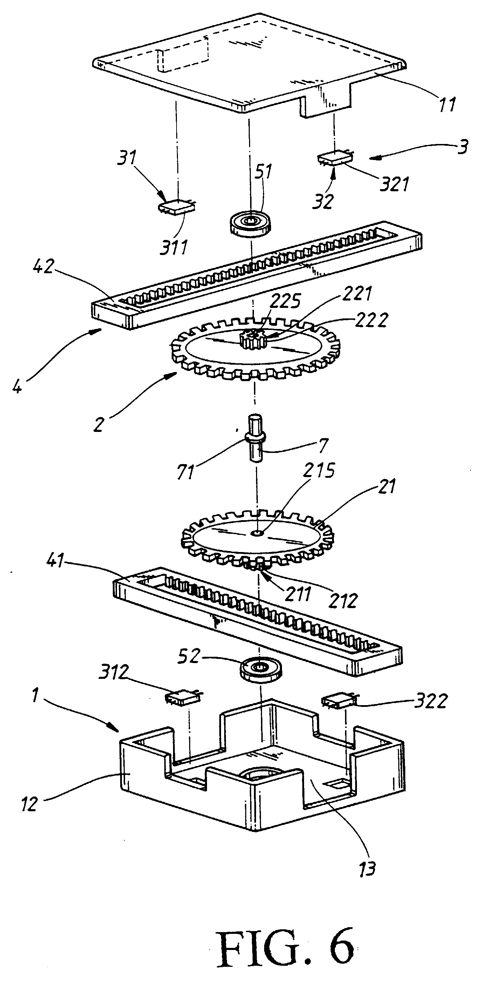

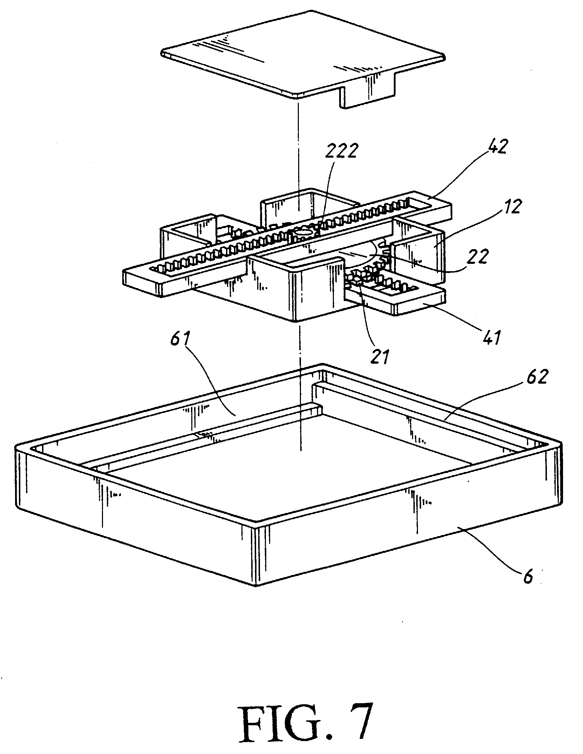

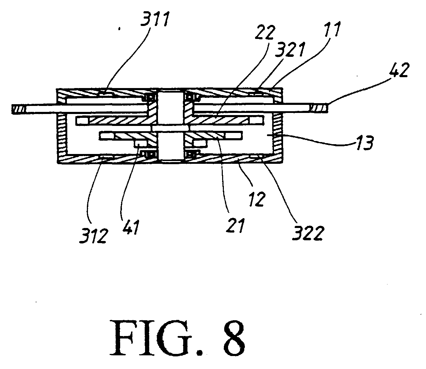

Turning now to the embodiment shown in Figs. 6, 7 and 8, the cursor controlling device according to this embodiment comprises a case 1 consisting of an upper part 11 and a lower part 12, the lower part having side walls to define a container 13. An optic grid set 2 is installed within the case 1 and comprises at least two optic grids 21 and 22 so as to associate with the movements of the X axis and Y axis. An optic sensing set 3 is also installed within the case 1 and comprises at least two sensor sets 31 and 32 each of which has at least an illuminated portion 311 or 321, respectively, and a receiving portion 312 or 322, respectively, said two portions being buried on the upper and lower sides of said upper and lower parts 11 and 12 with respect to said optic grids 21 and 22 for reading bright and dark messages. A sliding bar set 4 having at least X axis and Y axis sensor set 41 and 42 for driving said optic grids 21 and 22, respectively, is also installed within the case 1.

The optic grids 21 and 22 have a circular shape and respective driving portions 211 and 221 are gears 212, 222 which are connected with the centres of said circular shapes. The two optic grids 21 and 22 are also provided with central holes 215 and 225 through which a central shaft 7 extends. The shaft 7 has an increased diameter central portion 71 for separating the two optic grids 21 and 22 so that they do not collide with each other. In assembly, the gears 212 and 222 of the driving portions 211 and 221 of the optic grids 21 and 22 are located in slots 411 and 421 respectively of the sensor sets 41 and 42 of the X axis and Y axis, respectively, and are engaged with respective racks 412 and 422. The ends of the shaft 7 are located in bearings 51 and 52 which are positioned in apertures in the upper and lower parts 11 and 12 of the case 1. Apertures are provided in the side walls of the lower part 12 to permit the sensor sets 41 and 42 to extend therethrough and the upper part 11 is provided with projections 14 which are arranged to be located in two of the opposing slots to position the upper part and to hold the sensor sets in position. The distribution of bright and dark lattices of the optic grid set 2 and the reading of the optic sensing set 3 are the same as those for the first embodiment described hereinabove.

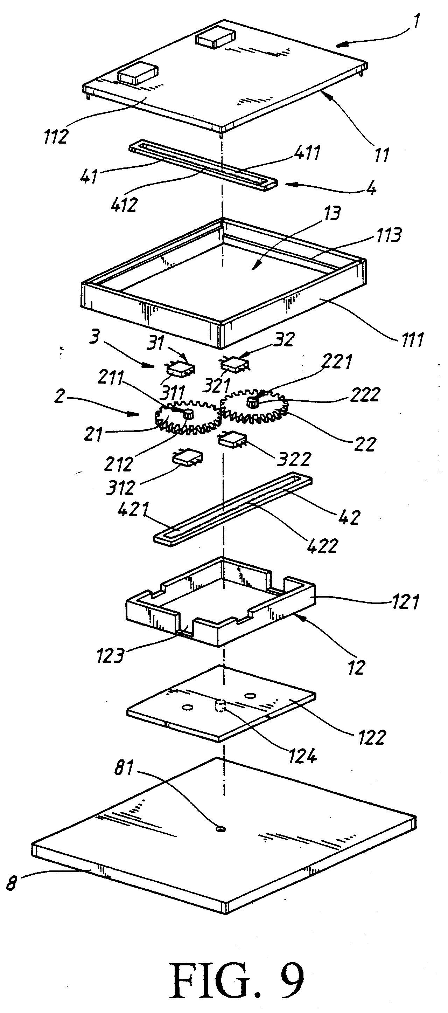

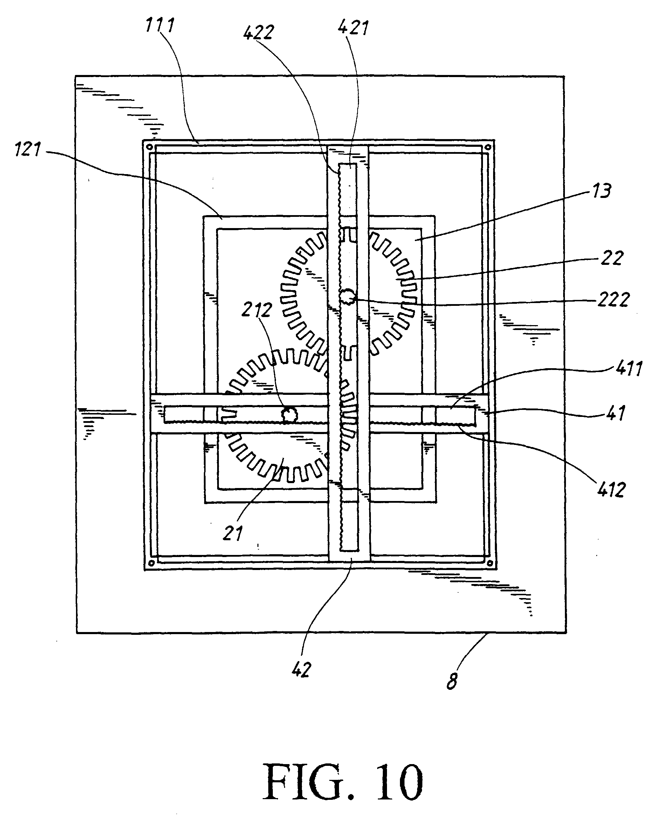

The embodiment shown in Figs. 9 and 10 of the drawings comprises a case 1 consisting of an upper part 11 and a lower part 12, the upper part 11 being constructed from a frame 111 and a plate body 112, while the lower part 12 is constructed from a frame 121 and a plate body 122 whereby a concave cavity 13 is formed between the upper and lower parts 11 and 12. The plate body 112 of the upper part 11 may be provided with an input key, while the opposing inner sides of the upper part 11 are provided with walking tracks 113.

An optic grid set 2 is installed within the case 1 and comprises at least two optic grids 21 and 22 on which a plurality of bright and dark lattices are installed so as to be associated with the movement of the X axis and Y axis. An optic sensing set 3 is also installed within the case 1 and comprises at least two sensor sets 31 and 32 each of which has at least an illuminated portion 311 or 321, respectively, and a receiving portion 312 or 322, respectively, the two receiving portions being associated with said optic grids 21 and 22 respectively for reading the bright and dark messages.

A sliding bar set 4 having at least X axis and Y axis sensor set 41 and 42 for driving said optic grids 21 and 22, respectively, is also installed within the case 1, said sensor sets 41 and 42 extending through slots 123 in the frame 121 of the lower part 12 of the case 1.

The plate bodies 112 and 122 are provided with holes for positioning the two optic grids 21 and 22 in parallel. The optic grids 21 and 22 have a circular shape and respective driving portions 211 and 221 are gears 212, 222 which are connected with the centres of said circular shapes and which are located, respectively, in slots 411 and 421 in the sensor sets 41 and 42. Racks 412 and 422 on the inner side of the slots 411 and 421 directly engage with the gears 212 and 222. The ends of the sensor sets 41 and 42 rest on and can slide along the walking tracks 113 of the upper part 11 of the case 1. In this assembly, since the optic sensing set 3 and the set 4 are located in the same plane, the width thereof may be reduced to a minimum value for installing on a manual operating device, and similarly, it may be used to control the cursor movement on the display screen with a very small moving area.

Again, in this embodiment, a circuit board may be installed directly as the lower plate body 122, and a pillar 124 may be provided on the lower portion for inserting into a hole 81 in the surface of a bottom plate 8 so that the sliding bar set 4 and optic grid pieces set 2 may be installed on said bottom plate 8 and may be rotated within any angle with the case 1, but the positioning value will be input exactly according to the operation of the human hand.

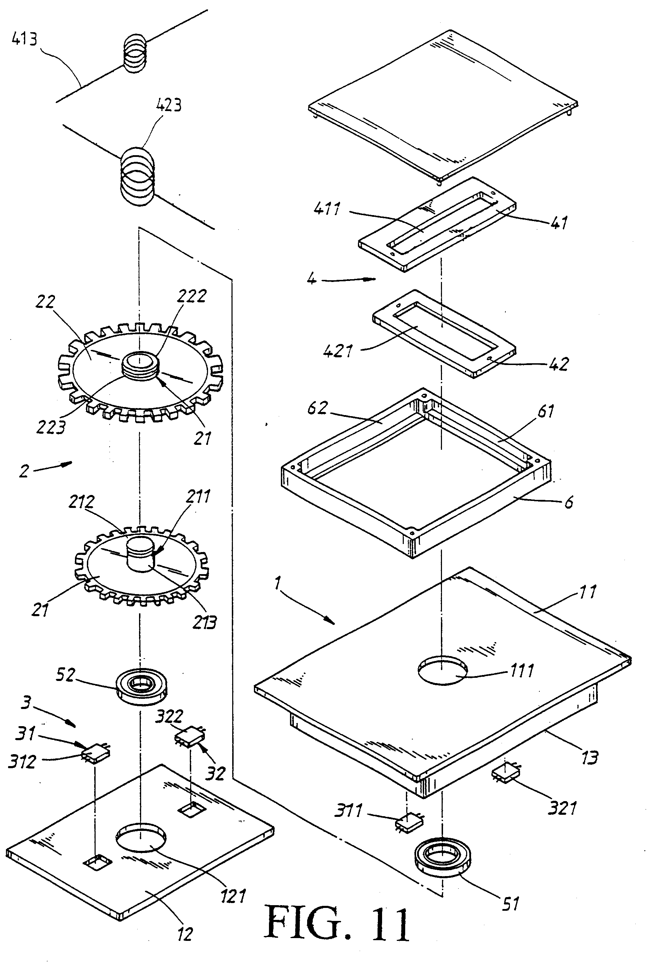

In the embodiment shown in Fig. 11, the driving portions 211 and 221 of the optic grids 21 and 22 may also be hollow axial bodies, while ropes 413 and 423 are installed on the sliding bar set 4, respectively. When the two ropes 413 and 423 are combined, the medium portion thereof is intercated around the hollow axial bodies of the optic grids and the ends thereof are fixed on the sliding bars 41 and 42. Accordingly, the optic grids 21 and 22 may be driven to be rotated by the movement of the sliding bars 41 and 42.

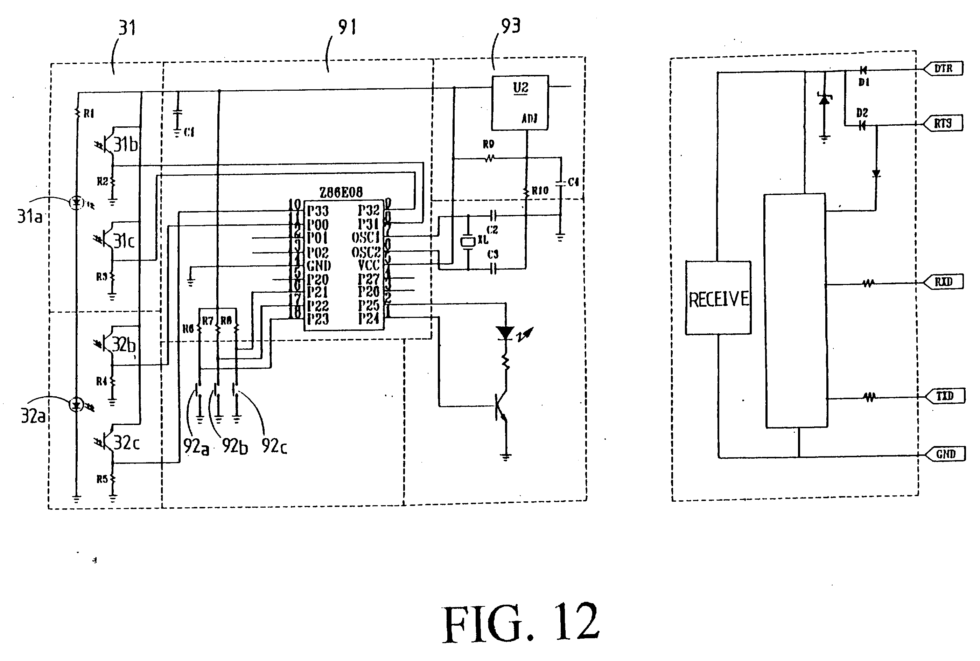

Shown in Fig. 12 is an application circuit diagram of said embodiment; wherein light is emitted from the light emitting diode 31a of the X axis optic sensing set 31 on the light emitted portion 311 of a photoelectric circuit to optic grid 21, the phase XA generated by the bright and dark lattices is received by the optic transistor 31b of the receiving portion 312, and the phase XB is received by the optic transistor 31c, and then the X axis moving signal is checked out, subsequently the moving signal of X axis and Y axis are transferred to control circuit 91 for calculating. The button key circuit 92 is installed with a left switch 92a, a central switch 92b and a right switch 92c, the signals generated thereby are also transferred to control circuit 91; a steady voltage circuit 93 is used to supply steady power supply, an output circuit 92 is used to transfer the signal amplified by control circuit 91 to a computer through a transmission line.

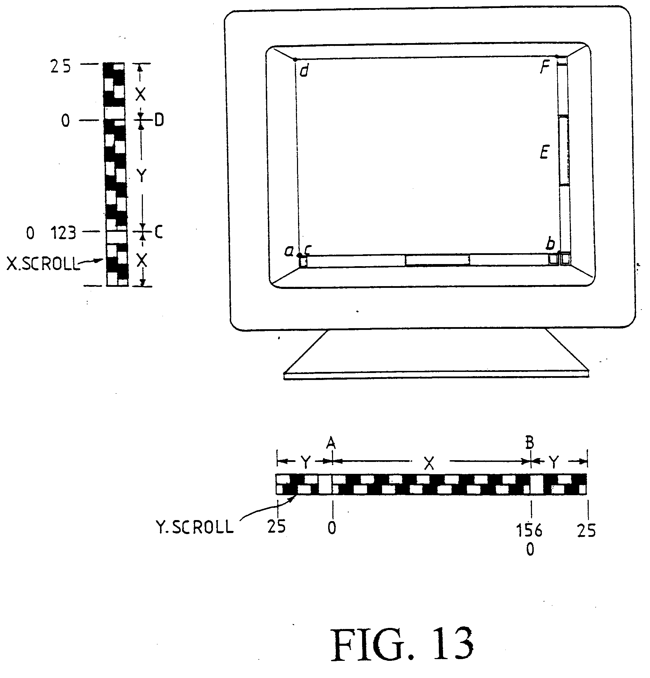

Fig. 13 shows the cursor controlling method of the firmware of the present invention, wherein the control circuit is used to control the movement and positioning of a cursor on a computer display, the method utilising a finger controllable element having a case 1, at least two optic grids 21 and 22 and at least two sensor sets 31 and 32 for generating bright and dark signals for reading the messages on the finger controllable element and at least two recorders for presetting the length value which is used for the optic grids 21 and 22 to produce the bright and dark signals. The method is controlled by the following two operating modes:

a first operating mode is used to detect the movement of said finger controllable element so that the moving distance of the cursor on the display is represented by at least two ratios v1, v2, v3, ...vn which is positive proportional to the moving distance of the cursor moving on the display, i.e., the movement from the left point A to the right point B, or from the upper point C to the lower point D, of the cursor may correspond to the distance of point a to point b, or point c to point d on the cursor's screen;

a second operating mode in which a default enlarged virtual pointer section will cause the finger controllable element to move into an enlarged area, i.e. to convert into at least a specified instruction, for example, as shown in the figure, if the finger controllable element may be moved to a desired point on said display since the operation is an absolute coordinate, and then is over the boundary to the second operating mode so that the operation of two specified instructions may be performed, while one operation will be converted into the movement of the display scrolling the control rod E, and in another operation, the operation mode is converted so the cursor will fast move to the boundary F of said display.

The boundary of said first and second operating modes may be converted directly by said finger controllable element, wherein a switch is directly installed on the hardware; or as shown in Fig. 12, wherein compressed boundaries installed on the bright and dark lattices of the optic grids 21 and 22, respectively, as used to separate the two operating modes. If said finger controllable element is within said boundary, the operation is in the first operating mode, or if said finger controllable element is outside the boundary, then the operation is in the second operating mode. Therefore, the following further functions may be programmed:

1. If the finger controllable element is moved to the boundary of either axis (X axis or Y axis) to convert into the second operating mode, then it is judged that the movement is from the scroll control rod.

2. If said finger controllable element has read an axial boundary, and then another boundary is read (for example, the X axis is read firstly, and then the Y axis is read), then the operation is converted to the action of fast arriving on the display.

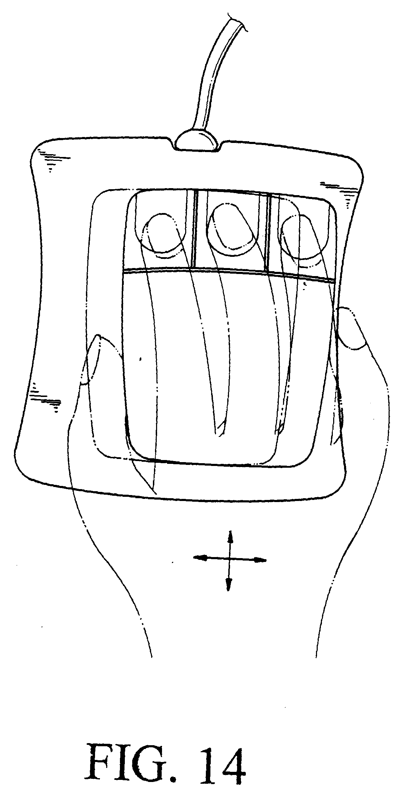

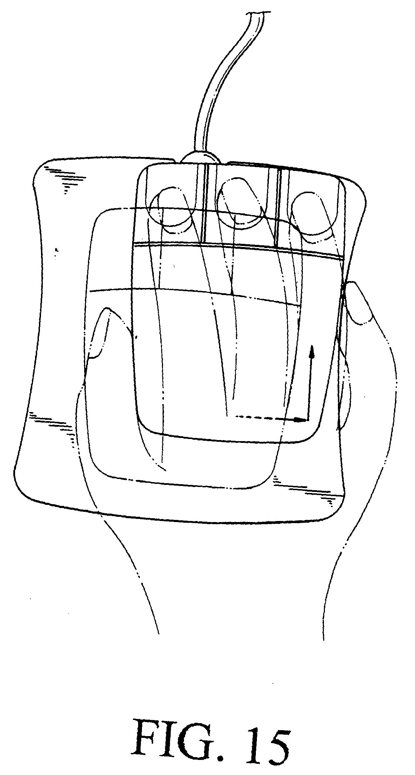

In other words, as shown in Fig. 14, if in the manual operation the finger controllable element moves into the said area in parallel from the upper, lower, left and right directions, then the operation is a movement of scrolling control rod, while as shown in Fig. 15, if the finger controllable element entering said area is moved vertically to the boundary, then it converts into an operation of fast arriving at the boundary of said display, for example, the finger controllable element is entered from the right side and then as reading the X axis, the operation is entered into the second operating mode, and then it is converted into the movement of scrolling the control rod, after entering, the finger controllable element is moved upwards or downwards linearly to the boundary to read the boundary messages of the Y axis, and then it is converted into an operation of fast arriving at the boundary. However, in order that the said moving operation of said scrolling control rod is the same as that of manual operation so as to be controlled precisely, it is specified the operation of entering the second operation mode from the X axis boundary is specified to perform the scrolling of the Y axis, while the operation entering the Y axis boundary is specified to perform the scrolling of the X axis. In judging within the structure, the centre for the place locating the display scrolling control rod, and after entering into said mode, the finger controllable element is further moved vertically (for example, the finger controllable element enters the second operating mode from the right or left direction, and then moves upwards or downwards), then it is considered that the shifted centre begins to scroll, and the scrolling may be accelerated according to the acceleration of the finger controllable element or the staying time of said finger controllable element, until finally if the cursor is entered into the boundary, then the operation is changed into the operation of directly arriving at the boundary fast. Such an automatic scrolling way is matched with the requirement of ergonomics, Windows 95 and the Internet.

Besides, in said embodiment, the bright and dark lattices on the boundary in the second operating mode may be installed on one side of the optic grids 21 and 22. Such an embodiment will cause the same effects. The change of such a design is only to change the boundary originally installed on the two ends to one side.

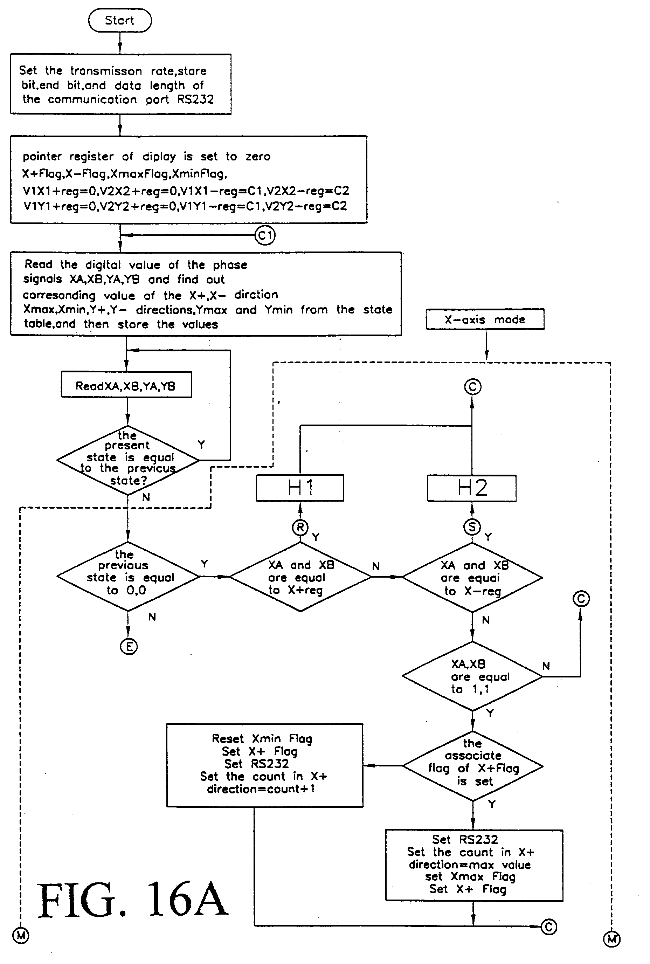

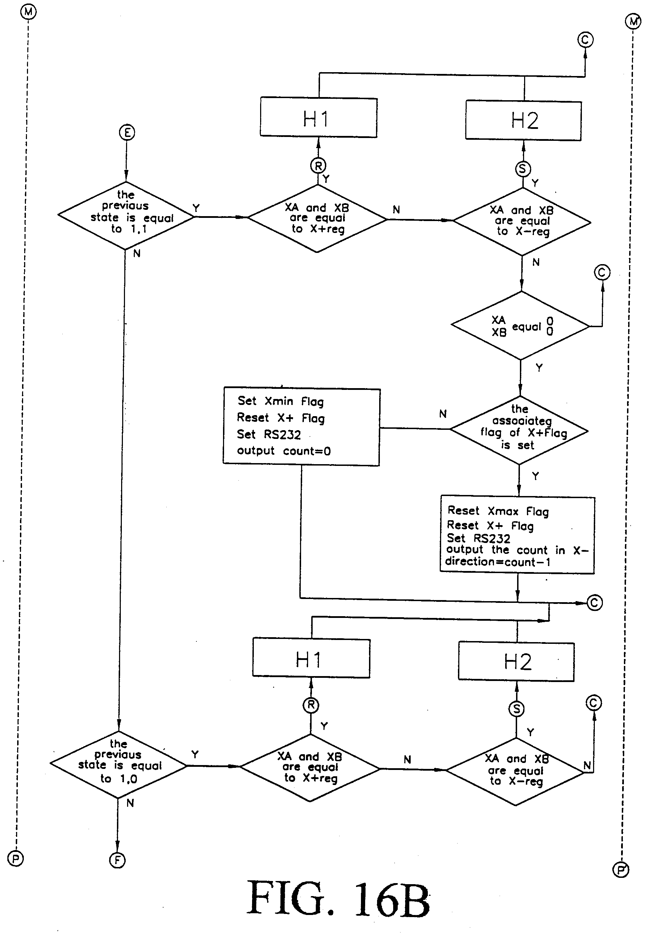

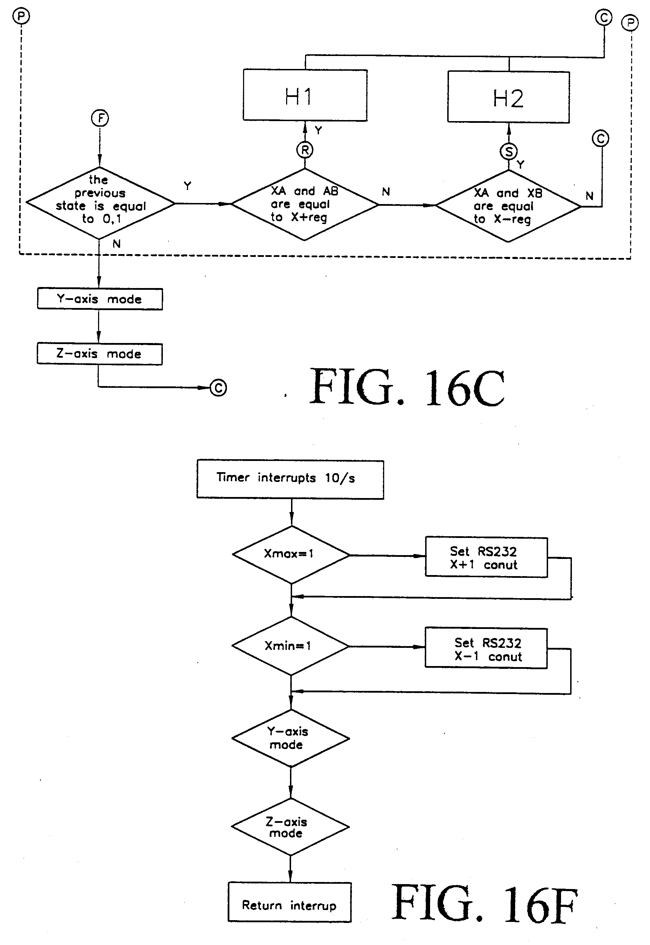

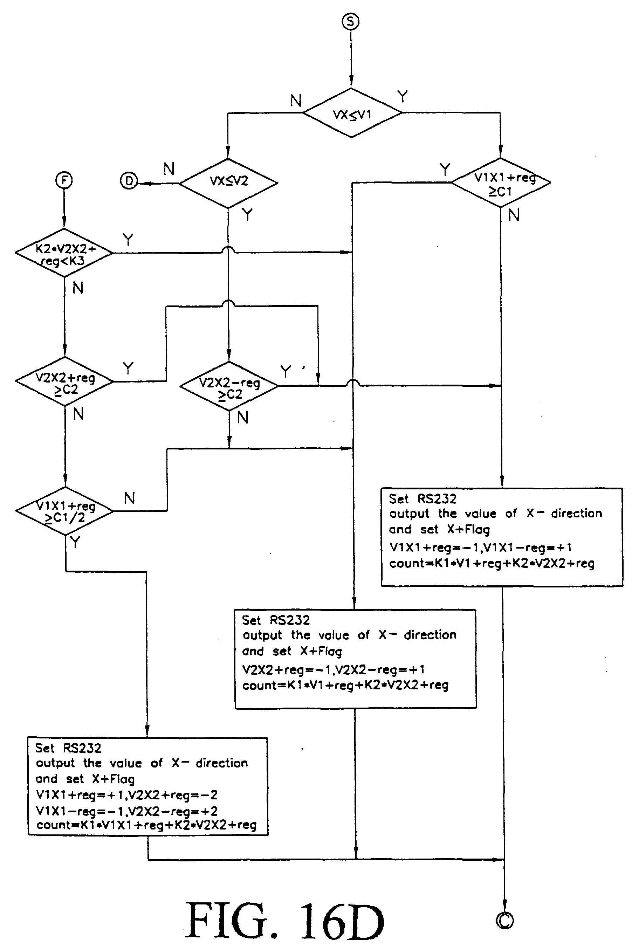

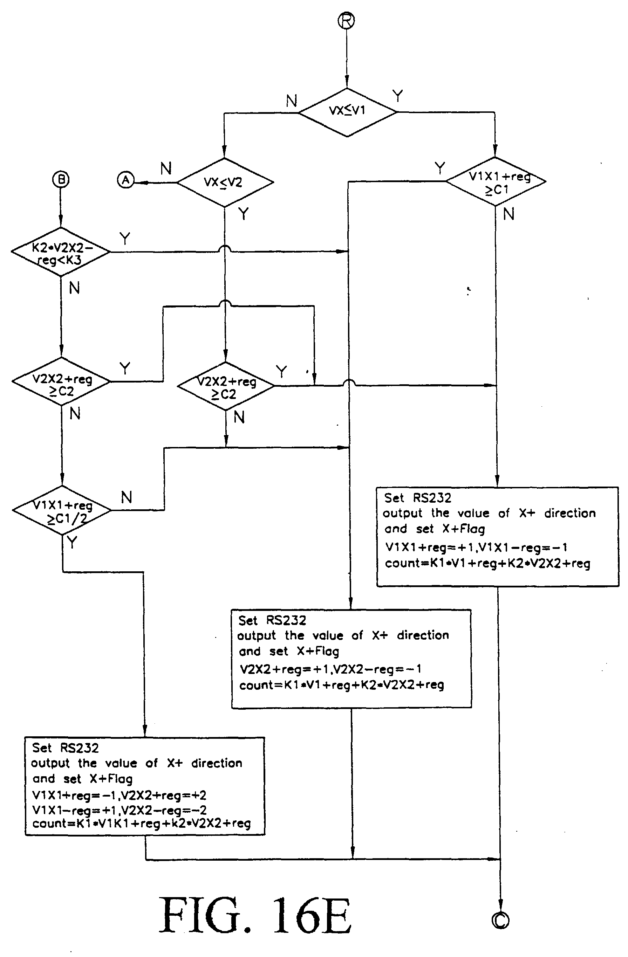

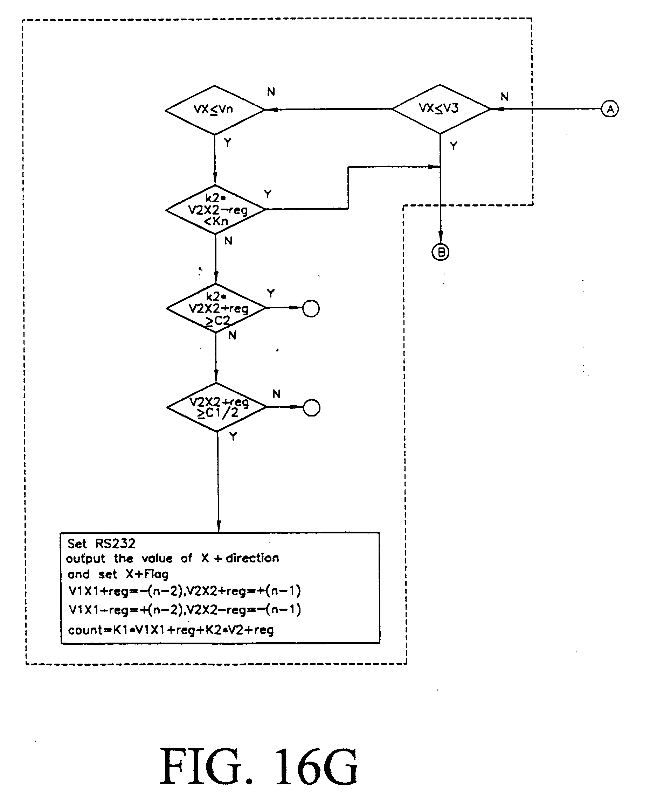

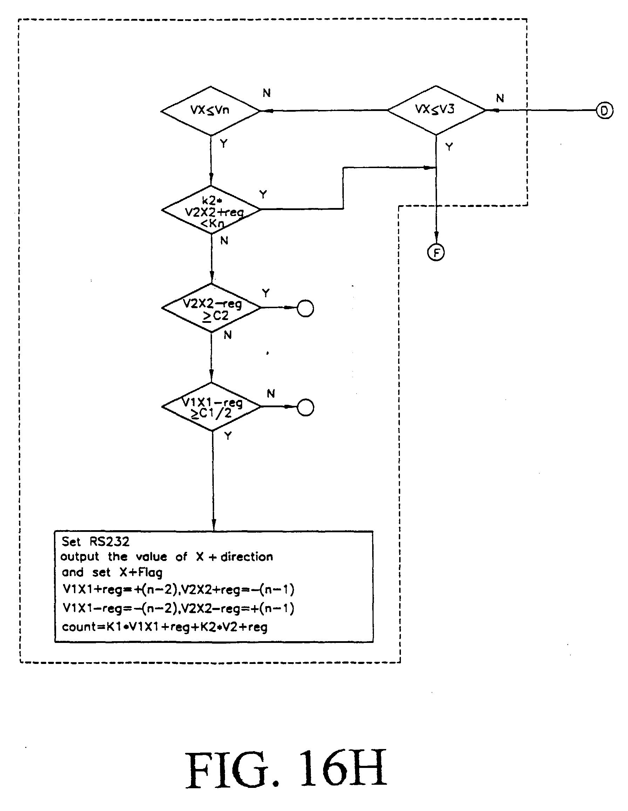

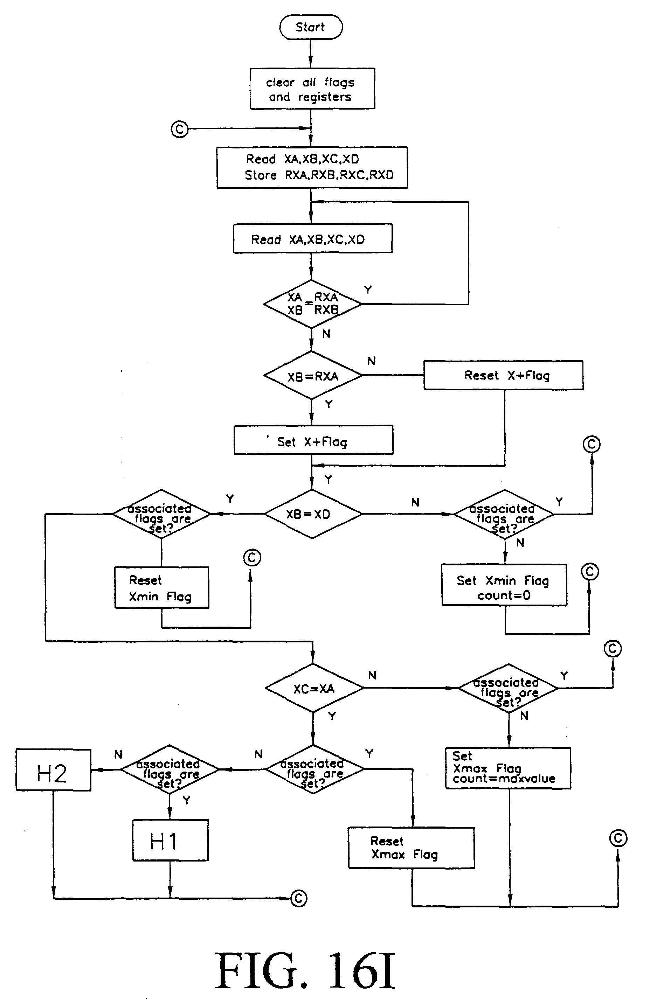

The cursor controlling method of the present invention will be described in the following with reference to the flow diagrams of Fig. 16.

In the control flow diagram in Fig. 16A and 16B, the transferring speed of RS232, initial bit, end bit and bit length are set at first, then all the flags and recorders are cleared, and preset value for identifying speed is set. Next, the values XA, XB, XC and XD are read, and then the values of X+ direction, X-direction, Xmax and Xmin are searched from a comparison table (referring to the conditioning Table I, in said table, only the X axis is listed as a reference), finally these values are stored for comparing. After the values of XA, XB, YA and YB are read again, these values are compared with the previous values. If they are equal to each other, then it is determined that the finger controllable element has no displacement, then the system is restored to the status of reading the values of XA, XB, YA and YB. If these values are not equal, then the X axis mode identification (as the X axis mode shown in the dotted line of Fig. 16A) is performed first. During identification in this mode, the previous status is divided in one of the status (0, 0), (1, 0), (1, 1), (0, 1), the change time for each status may be read from the identification of the computer, thus, the finger controllable element may be derived. Since the clock of a computer oscillator is 4-8 MHz, but in practice, the speed for a finger to control the finger controllable element will not be over 5KHZ, both clocks have a large difference, therefore, the speed of the finger controllable element is easy to identify.

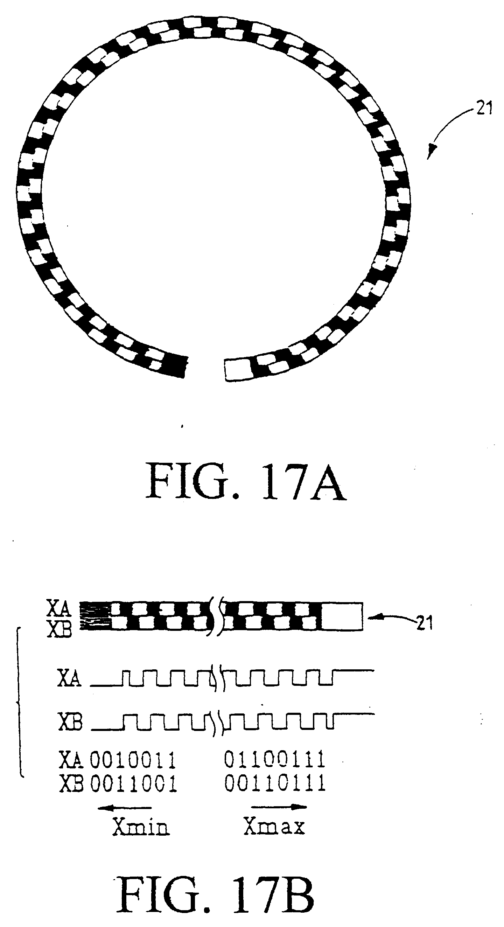

Fig. 17A and 17B show a optic grid and the respective signals of the light and dark lattices. Assuming the previous status is (0, 0), referring to Table I and Fig. 16E, if XA = 1, XB = 0 is X+ direction, if XA = 0, XB = 1 is X- direction, if XA = 1, XB = 1 has two conditions, one is minimum separation, and the other is maximum value, which is determined according to the setting of the X+ flag. Thereby, the signals X+ direction, Xmin, Xmax, etc. are derived, and they are recorded in a register temporarily for identifying by program. Therefore, initially, the finger controllable element is moved to any one of the four corners, after resetting to the initial value, the absolute value of correct coordinates of X axis and Y axis may be transferred. If such boundary is not installed on the optic grid 21 (or 22), then the finger controllable element may be pushed to the upper left corner, and meanwhile, C1 and C2 are reset to correspond to the original point at the upper left corner of the display. Therefore, as the finger controllable element is moved rightwards to exceed the boundary (1280), it may be used to identify the second operating mode.

Fig. 16D and 16E show the subprogram of positive direction and negative direction, respectively. The moving distance of the cursor moving in the display is positive proportional to the moving distance of the finger controllable element, and the positive proportional constant of the finger controllable element is determined according to the different speed level. The object of this program is listed in the following:

(1) The moving distance of the finger controllable element is reduced to be equal to or smaller than 1.27 cm (0.5 inch), but the moving distance of the cursor moving on the display will be reduced from the reduction of the moving distance or speed of the finger controllable element, the moving speed of the cursor on the display has different proportional ratios which are proportional to the moving distance of said finger controllable element, thus it is possible that the finger controllable element has arrived at the boundary, while the cursor has not arrived at the boundary, or the finger controllable element has not arrived at the boundary, but the cursor has arrived at the boundary.

(2) The cursor of a display has moved to an area, then the cursor has fine movement around said area.

(3) The moving speed and position of the display corresponds to the speed and position of said finger controllable element. If the finger controllable element moves fast, the speed of said cursor is increased correspondingly, thus the operation will be steady, fast and precise.

(4). Said finger controllable element (for example, in X axis) has two registers in the positive direction, and two registers in the negative direction, the positive and negative registers correspond with each other. Said finger controllable element causes the cursor to move to the original point correctly so that the cursor on the display also moves to the original point correctly.

The moving speed of the finger controllable element VX is changed within at least two different speed levels V1, V2, V3, .... which correspond to different ratio constant K. The K value represents the moving distance of the cursor moving on the display which is positively proportional to the distance constants K1, K2 of the cursor moving on the cursor area. According to the steadiness of the cursor moving on the display, the values of K1, K2 may be (1, 2), (1, 3), (1, 4), (2, 4), etc. (the values of K1 and K2 may be preset as default values, and the user also selects said values according to the driving program). Using the formula 1: $C1 + C2 = C3$, and formula 3: $(K1 \times C2) + (K2 \times C2)$ = the distance of the display, the displacement distance C1 and C2 (which is preset as the default values according to the resolution of display) of the finger controllable element in first and second speed levels may be determined. Therefore, if the resolution of a display has been increased, it is possible only to increase the value of K2, thus the fine displacement of the cursor may match with the minimum displacement of the pixel of screen resolution. Although the value of K2 is increasing with the increasing of display resolution, the minimum displacement of a pixel is also reduced, and the cursor may be moved steadily on the display.

Example:

Assuming that the resolution of X-axis of the display is 640; the displacement of the optic grid is equal to 196 x 0.08mm = 15.68mm

$$640=(1+C1)+(4xC2), K1=1, K2=4$$

$$196=C1+C2$$

$$\therefore C2=148, C1=48;$$

and the resolution of X-axis of the display is equal to 1024;

$$1024=(1+C1)+(7XC2), K1=1, K2=7$$

$$196=C1+C2$$

$$\therefore C2=138, C1=58;$$

When the display resolution is increased from 640 to 1024, but the distance between pixels is reduced, regardless of K2 being changed from 4 to 7, the smooth performance of the cursor moving on the display will not be affected. The cursor may be moved at precise displacement from pixel to pixel on the display, no matter the change of the display resolution on the precise displacement mode. While reduction of the distance of said optic grids will not be substituted by reducing the illumination of said optic grids and the distance of each grid, however, the number of grids is decreased (in the period art the original 320 grids is reduced to 200 grids), thus when the finger controllable element is moved through one grid, the cursor of said display will not be moved through 2 or 3 grids.

Figs. 16D and 16E show the subprogram flow charts of the control program, explaining how the cursor is moved to a positive direction H1 and a negative direction H2, respectively, and the record thereof is V1X1+reg and V1X1-reg, V2X2+reg and V2X2-reg. When the finger controllable element is moved in the positive direction, the value stored in positive directional registers V1X1+reg and V2X2+reg will be increased, and another, the value stored in negative directional registers V1X1-reg and V2X2-reg will be decreased according to the increment of the positive directional registers. (When X-axis coordinate is a minimum value, the value V1X1+reg is 0, V1X1-reg is equal to C1, V2X2+reg is 0 and V2X2-reg is equal to C2; when the X-axis coordinate is a maximum value, the value V1X1+reg is equal to C1, V1X1-reg is 0, V2X2+reg is equal to C2, and V2X2-reg is 0). The moved displacement of the finger controllable element at the third speed level is converted to values V1X1 and V2X2 by using formulae 4 and 5 listed in Table III. Then, these values are stored in registers V1X1+reg and V2X2+reg respectively, and then the value of K3 may be calculated by using formula 2 listed in Table III. After these procedures, the finger controllable element may correctly return to the original point, and the cursor on the display may also correctly return to the original point.

For example;

$$K1=1, K2=4$$

$$K3=(n-1)K2-(n-2)K1$$
$$=(3-1)4-(3-2)1$$
$$=7$$

Therefore, as the displacement of the finger controllable element is equal to 1, the movement of the cursor on the display will be equal to 7. Further, the displacement of the finger controllable element at the third speed level may be converted and recorded in the registers V1X1+reg and V2X2+reg by using formulae 4 and 5 listed in Table III.

When the displacement of said finger controllable element is equal to 1, the displacement of said display is equal to 7

$$K3xV3X3+=K2xV2X2+ +K1xV1X1$$

$$V3X3+ =V2X2+ +V1X1$$

$$7x1 =4xV2X2+ +V1X1$$

$$1=V2X2+ +V1X1+$$

$$V2X2+=+2, V1X1+=-1$$

It is noted, in this case, the increment of V2X2+reg is 2, and the decrement of V1X1+reg is 1.

Therefore, it shows that for the value at positive direction, V2X2+reg + V1X1+reg = 2+(-1) = 1 , this is matched with the real displacement of the finger controllable element at the third speed level. Moreover,

$$\text{formula 3: (K1xC1) + (K2xC2) = the displacement of the display}$$

$$K1XV1X1+reg + K2VX2X2+reg = \text{the displacement of the display}$$

$$\text{i.e., (1x-1) + (4x2) = 7}$$

It shows the same result that the displacement of the cursor on the display is equal to 7 when the finger controllable element is moved at the third speed level. The displacement of the finger controllable element at the third speed level is converted into values V2X2+ and V1X1+ by formulae 4 and 5 listed in Table III, and then said values are recorded in registers V2X2+reg and V1X1+reg, respectively.

It is clear that the moving speed and positioning of the cursor on the display is matched with that of the finger controllable element of the present invention with the advantages of stable, fast and precisely moving effects. The finger controllable element has two positive directional registers and two negative directional registers. The values stored in the positive directional registers is respective to that in the negative directional registers so that the finger controllable element may correctly return to the original point and also the cursor may correctly return to the original point correspondingly.

In the present invention, it is necessary the positive directional registers are respective to the negative directional registers. The positive directional registers and the negative directional registers are only for the purpose of understanding. It is only necessary to install one register on either direction of the X axis.

After the main program has determined the procedure in direction X+ as described hereinabove, in step F41 of Fig. 16D and 16H, the procedure determines whether VX is less than or equal to a predetermined speed. If yes, it indicates the speed of the finger controllable element is less than the lower limit of speed V1, i.e. the first speed level. Then in step F42, it further determines whether the value stored in V1X1+reg of the first speed level is greater than or equal to C1. In step F43, if no, then the value of V1X1+reg is increased by 1 and the value of V1X1-reg is decreased by 1, and the value is transmitted. If the value recorded in register V1X1+reg of the first speed level is larger than or equal to C1, it indicates the V1X1-reg reaches a maximum value. In such a case, the displacement of the cursor will be set to be proportional to that of the finger controllable element multiplied by a value K2, and then in step F46 increasing the value of V2X2+reg by 1, and decreasing the value of V2X2-reg by 1, and the value is transmitted.

If the result in step F41 is no, it indicates that the finger controllable element is equal to the upper limit of the speed V1. Then in step F44, it further judges whether VX is equal to the upper limit or lower limit of the speed V2. If VX is equal to the lower limit of V2, then in step F45, it is judged whether the value recorded in the register V2X2+reg is maximum value or not. If yes, the displacement of the cursor will be set to be proportional to that of the finger controllable element multiplied by a value K1. In step F46, if no, the displacement of the cursor will be set to be proportional to the displacement of the finger controllable element multiplied by a value K2.

If only three speed levels are set in the finger controllable element, A and B in Fig. 16D are connected together. Thus, if the result in step F44 is no, then step F47 is performed to read the left count remaining in the positive register V2X2+reg. If the value of K2XV2X2-reg is less than K3, the displacement of the cursor will be set to be proportional to that of the finger controllable element multiplied by K2, and then step F46 is performed to prevent the cursor value from exceeding the display boundary or cannot be restored to the original point as the performing speed of the cursor positioning device exceeds that of the speed V2. If the result in step F47 is no, step F48 is performed to judge whether the register V2X2+reg is greater than or equal to a maximum value. If yes, the displacement of the cursor will be proportional to that of the finger controllable element multiplied by a constant K1; if no, it indicates that the register V2X2+reg remains the value for the displacement of the finger controllable element in the positive direction at the third speed level may be transferred and recorded in the register V1X1+reg and V2X2-reg. Next, in step F49, the procedure judges whether the fine displacement in the positive direction exceeds a half of the distance. If no, step F46 is performed in which the displacement of the cursor is still proportional to the displacement of the finger controllable element multiplied by a constant K2; if yes, step F50 is performed, wherein the value of V1X1+reg is subtracted by 1, the value of V2X2+reg is added by 2, the value of V1X1-reg in negative register is added by 1, and then the value of V2X2-reg is subtracted by 2. Therefore, when the finger controllable element is operated at the third speed level, the register V1X1+reg remains at a value that is half of C1. In consequence, as the cursor is moved to any object on the display, there are fine displacements always around where the cursor is present.

Furthermore, the speed VX of the finger controllable element of Fig. 16D is divided into three speed levels, i.e. $0<VX\leq V1$, $V1<VX\leq V2$, and $VX>V2$. Besides, the speed VX may be divided into two speed levels, still having good performance as described hereinabove and also applicable to most procedures of Fig. 16D. In this alternative embodiment, if the answer in step F41 is no, step F47 is performed, neglecting steps F44 and F45. It means that the speed level V1 is set to be nearly similar to or the same value as V2. So, the second speed level may be neglected as the finger controllable element judges the value of VX. Therefore, the firmware may be modified, or the key switch may be further programmed. Thus, the user simply clicks the switch to enable the cursor positioning device to operate at the first speed level. If the switch is clicked by the user again, the cursor positioning device can operate at the third speed level in which the cursor on the display is permitted to be moved fast. Moreover, the movement of the cursor on the display is also in accordance with the speed increment of said finger controllable element moving on said speed level.

Fig. 16E shows a subprogram flow chart of the control program which is similar to that of Fig. 16D.

Fig. 16G shows a subprogram flow chart of the Vx of a positive finger controllable element having a plurality of speed levels. The A and B thereof are connected to corresponding A and B of Fig. 16D. Therefore, if the result in step F44 is no, the procedure performs step F61 of Fig. 16G; and if the result in step F61 is yes, the procedure performs step F47 of Fig. 16D, in the step the speed VX in the positive direction uses the same control procedure as that in the third speed level, the fourth speed level, etc. In step F63, whether the cursor is over the boundary of the display is judged. If yes, the speed will be changed to a lower speed level to further judge whether the cursor exceeds the boundary again. The next step F64 is performed only until the cursor does not exceed the margin. In step F64, it judges whether the register V2X2+reg is a maximum value. If yes, the procedure returns to step F43; if no, the procedure performs step F65. In step F65, it judges whether the register V1X1+reg is larger than a half of the value C1. If no, step 46 is performed; if yes, it moves to step F66, and the high speed value of the finger controllable element (i.e. the third speed level or higher speed) is converted into values X2X2+ and V1X1+, and then records the values into the register V2X2+reg and V1X1+reg respectively. In consequence, the speed and position of the cursor on the display matches that of the finger controllable element with the advantages of smooth, steady, and precise positioning effect. Fig. 16H shows a flow diagram in the negative direction, the operating theory thereof is similar to that of Fig. 16G.

The Y-axis procedure may follow that of the X-axis procedure with similar control flow described hereinabove.

Accordingly, by using the detecting of hardware and the judgement about the boundary which is different from that in Fig. 16A-C, the boundary judgement may be performed by a plurality of signals on the optic sensing set 3 by the lattice on the two sides of the active optic grids.

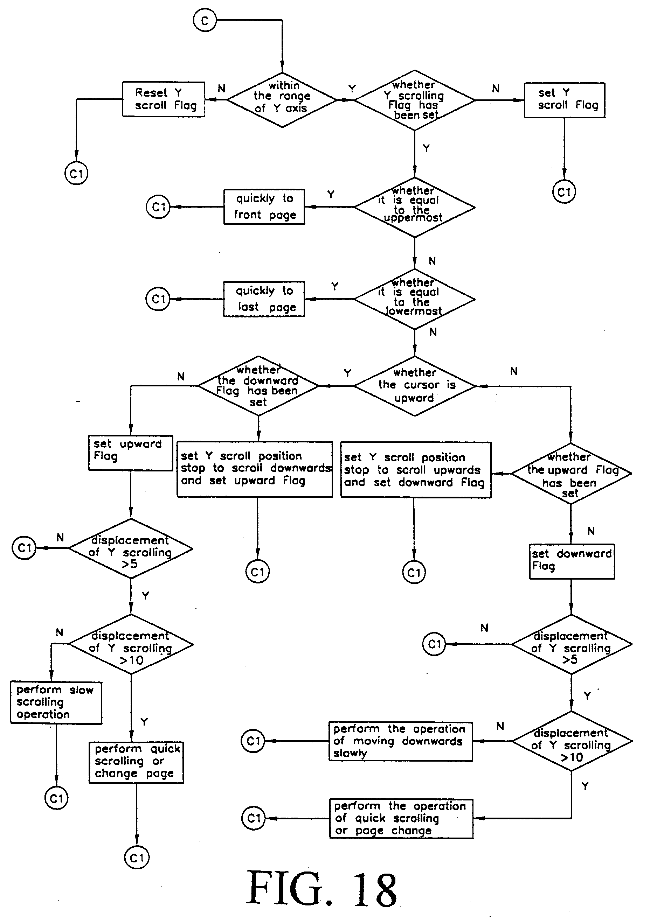

Now referring to Fig. 18, it shows the control flow diagram of the present invention in the second operating mode, wherein said actuated step C and C1 is the same as the indications of C and C1 in Fig. 16. At first, it is judged whether the boundary of the finger controllable element has been within the range of the Y scroll in the second operating mode, if no, the Y scroll is rearranged, and the flag flow is returned to C1, if yes, then the procedure is further judged whether the Y scroll is set, if the Y scroll has not been set, then the Y flag represents that the finger controllable element is just into said second operating mode and the scrolling operation has not been performed. After the Y scroll is set, the procedure will return to C1, otherwise, if the Y scroll has been set, it represents that the finger controllable element has been in the second operating mode, and now the scroll operation will be performed. Thus, next, the procedure judges whether said finger controllable element is on the uppermost or lowest of said display, if yes, the operation for performing the second operating mode is switched to the operation of the page changing of said display so that the display is changed to the previous page or next page; alternatively, if said finger controllable element is on the uppermost or lowest of said display, then the procedure further judges whether the position selected by said Y scroll has been changed. If the answer is yes, then it judges whether the Y scroll is moved upwards or downwards. In the flow diagram, the procedure is divided into two parts, one part is used for describing the downward flow and the other part is used for describing the upward flow, therefore, only one part is described hereinafter, for example, if the Y scroll is moved upwards, then the procedure judges whether the downward flag has been set. If said flag has been set, it represents that originally the finger controllable element is moved downwards, thus the current upward movement is a negative message. Therefore, the Y scroll must be stopped for scrolling, and the upward flag is set, then the procedure is returned to C1. However, if the upward flag has not been set originally, then the procedure considers that the Y scroll is initially moved upwards, thus the upward flag is indicated, and then it judges whether the distance of the movement of Y scroll is within the range of 5 to 10 lattices. If the movement is smaller than 5 lattices, then the scrolling operation will not be performed and the procedure returns to C1 for preventing the reaction from being too sensitive so that a little vibration of the human hand will induce errors, if the moving distance is greater than 5 lattices but less than ten lattices, the slow speed scrolling is performed, while if the moving distance is greater than ten lattices, then the fast scrolling or page change mode is performed, and then the procedure returns to C1. Therefore, after the Y scroll has moved upwards for a period of time, if an inverse operation is indicated, since the lower part of said procedure has no preset upwards indication, the second operating mode is stopped, and then the cursor is restored to absolute coordinate condition of the first operating mode.

In the following, a practical application is described in order to show that the moving range of the finger controllable element of the present invention may be within the area with a length of 1.27 cm (0.5 inch). As shown in Fig. 12, for example, if the resolution of X axis is 1280, assume K1=1, K2=5 and K3=10 for programming three different kinds of speeds which are proportional to the moving point of the display, wherein: the number of grids with respect to the moving of X axis and finger controllable element Y axis under the first operating mode may be induced as the following:

$$X \text{ axis } 1280 = (1 \times C1) + (5 \times C2) + (10 \times C3)$$
$$= (1 \times 20) + (5 \times 20) + 10 \times 116)$$

$$\therefore C1 = 20, \ C2 = 20, \ C3 = 116$$

$$C1 + C2 + C3 = 156$$

$$Y \text{ axis } 1024 = (1 \times C1) + (5 \times C2) + (10 \times C3)$$
$$= (1 \times 19) + (5 \times 21) + (10 \times 90)$$

$$\therefore C1 = 19, \ C2 = 21, \ C3 = 90$$

$$C1 + C2 + C3 = 130$$

Thus, the grid number of the X axis and Y axis under the first operating mode are equal to C1 + C2 + C3 which are 156 and 130, respectively. Besides, in order to practice the second operating mode of the present invention, the walking space of 25 grids is needed to add on said boundary in order to match the requirement of the second operating mode, in consequence, the practical number of illuminated grids is:

X axis is equal to 25 + 156 + 25 = 206 grids
Y axis is equal to 25 + 130 + 25 = 180 grids.

Now assuming the minimum moving distance of the human hand is 0.06mm, i.e. the current used 400 DPI in one inch, wherein the programming distance for each grid is:

25.4mm/400≈0.06mm
thus the length of illuminated grid operated is:
X axis = 200 x 0.06 = 12.36mm which is smaller than 12.52mm (0.5 inch)
Y axis = 180 x 0.06 = 10.8mm which is smaller than 12.52mm (0.5 inch).

From the aforementioned description, it is appreciated that by the technique of the present invention, the moving range of the present invention is substantially designed within an area of 1.27cm (0.5 inch) so as to match the requirement for moving by hand, and within such a finite range the absolute coordinate method may be performed so as to correspond with the whole display, and the automatic scroll as well as the function of fast moving to the boundary may be programmed. Further, the device has a small volume and is sealed tightly so as to prevent the ingress of dust and water, and in usage it will hinder the action of hands, therefore, the defect in the prior art, such as large volume and ill positioning in usage, may be improved upon.

The aforementioned description is aimed at the preferred embodiment of the present invention. In the information carrier of the present invention, the optic grids 21 and 22 are performed with the sensing sets 31 and 32 of the reading set, wherein the information signals "0" and "1" are generated by the transparency and non-transparency of the light and dark lattices installed on the optic grids 21 and 22. However, in the same structure and object, the information carrier may have the following different types:

The information carrier may be reset as a magnetic disc or magnetic tapes may be adhered on the outer ring portion, while on the periphery of the magnetic disc or the spacings on the peripheral magnetic tape S and N polarizations may be installed. Therefore, by the reading set formed by Hall components or magnetic resistor sensors, similarly, the information signals "0" and "1" may be identified.

If the information carrier is changed to a touch pad, and a resistor layer with different frequencies are recorded on the spacer of the circumference, electric connections can be used as reading set so that different high or lower voltages are generated in moving, thus the information signals "0" and "1" may also be identified.

If the information carrier is changed to a CD Rom and digital signals with different frequencies are recorded on the spacer of the circumference so that the movement may be detected by the reading head of the reading set, the information signals "0" and "1" may also be identified.

If the information carrier is changed to an optic-shifting reflecting mirror and the textures with different refraction index are recorded on the spacer of the circumference, optic sensors can be used as the reading set so that the conditions of having light illumination or having no light illumination are generated in moving, the information signals "0" and "1" may also be identified.

While the present invention has been described with reference to the illustrated embodiments, this description is not intended to be construed in a limited sense. Various modifications of the illustrated embodiments of the invention will be apparent to those skilled in the art and the appended claims are intended to cover any such modifications or embodiments as fall within the scope of the invention.

TABLE I

|      | 1 | 2 | 3 | 4 |
|------|---|---|---|---|
| XA   | 0 | 1 | 1 | 0 |
| XB   | 0 | 0 | 1 | 1 |
| X+ direction | | | | |
| XA   | 1 | 1 | 0 | 0 |
| XB   | 0 | 1 | 1 | 0 |
| X- direction | | | | |
| XA   | 0 | 0 | 1 | 1 |
| XB   | 1 | 0 | 0 | 1 |
| Xmax | 1 | | | |
|      | 1 | | | |
| Xmin | | 0 | | |
|      | | 0 | | |

Flag: Xman · Xmin · X+
Register:
Xreg · X+reg · X-reg · Xmax reg · Xmin reg
Ysreg · Xsreg

TABLE II

VX : the operating speed of the finger controllable element, and also provides a predetermined value as a reference value for speed determination. V(n) represents the different moving speed of the finger controllable element and the setting of speed level reference value.

C1 : maximum displacement of the finger controllable element at minimum speed level.

C2 : maximum displacement of the finger controllable element at second speed level.

C3 : combined displacement of the finger controllable element, in which C1+C2=C3 .

K(n) : various reference constants at different speed level and the mutual relationship of various speeds of the finger controllable element.

V(n)X(n) : displacement of the finger controllable element at different speed levels.

V1X1+reg : a register for registering the displacement of the finger controllable element in positive direction at lowest speed level.

V2X2+reg : a register for registering the displacement of the finger controllable element in positive direction at the second speed level.

TABLE II (continued)

V1X1-reg : a register for registering the displacement of the finger controllable element in negative direction at lowest speed level.

V2X2-reg : a register for registering the displacement of the finger controllable element in negative direction at the second speed level.

TABLE III

formula 1. C1+C2=C3

formula 2. Kn=(n-1)K2-(n-2)K1 n≥3, K2>K1

formula 3. (K1xC1)+(K2xC2) = display distance

formula 4. KnxVnXn=K2xV2X2+K1xV1X1

formula 5. VnXn=V2X2+V1X1

## Claims

1. A cursor controlling device for controlling the movement and positioning of a cursor on a computer display, characterised in that the cursor controlling device comprises a case (1) consisting of an upper part (11) and a lower part (12) with a cavity (13) being formed therebetween; an information carrier set (2) within said case and having at least two information carriers (21, 22) for recording information signals used to identify "0" and "1", so as to match the two dimensional movement of the X axis and Y axis; a reading set (3) installed within the case for coupling with the information carriers to derive the signals of "0" and "1"; and a sliding bar set (4) having at least X axis and Y axis sensor sets for driving said information carriers (21, 22) respectively; said information carriers being installed within the cavity (13) of the case (1) and each of said information carriers having a driving portion (211, 221) which is arranged to be driven by a respective sliding bar set (41, 42) whereby the assembled volume of said cursor controlling device may be reduced to a minimum value so that the cursor controlling device may be moved with a very small area to control the movement of a cursor moving the display, and said sliding bar set and said information carriers are rotated within a suitable angle to fit operation by the human hand.

2. A cursor controlling device according to claim 1, characterised in that the cavity is formed by a frame having slots through which the ends of at least one of the sliding bar sets (41, 42) are arranged to extend.

3. A cursor controlling device according to claim 1, characterised in that a frame (111, 6) is installed on said device, two sides of the frame are installed with sliding grooves (113, 61) which are parallel to X axis, and the other sides thereof are installed with sliding grooves (113, 61) which are parallel to Y axis, the ends of the sliding bar sets being arranged to slide on the respective sliding grooves.

4. A cursor controlling device according to any one of the preceding claims, characterised in that the information carriers (21, 22) are mounted on the case in parallel relationship by means of shafts which are engaged in apertures in the lower part (12) of said case.

5. A cursor controlling device according to claim 4, characterised in that the lower part (12) of the case is provided with a pillar (124) which is adapted to be received in a hole (81) formed in a bottom plate (8) so that the sliding bar set (4) and the information carrier set (2) may be rotated to an angle to suit the requirements of the human head.

6. A cursor controlling device according to any one of the preceding claims, characterised in that the information carriers (21, 22) have a circular shape and the driving portion includes a gear (212, 222) which is connected with the centre of said circular shape and each sliding bar set (41, 42) is provided with a slot (411, 421) having a rack (412, 422) along one side which is engageable with the gear (212, 222) of the respective information carrier (21, 22) for driving said information carriers.

7. A cursor controlling device according to claim 6, characterised in that a small gear (212) is mounted on one of the information carriers (21) and a long shaft (213) is installed below and connected to the small gear (212) while a large gear (222) and a short shaft (223) are mounted on the information carrier (22), the short shaft having a bore which is adapted to receive the long shaft (213).

8. A cursor controlling device according to claim 6, characterised in that each of the information carriers is provided with a central hole through which a shaft (7) extends, said shaft having an increased diameter portion (71) which is arranged to be located between the information carriers to space said carriers apart.

9. A cursor controlling device according to any one of claims 1 to 5, characterised in that the driving portions (211, 221) of the information carriers comprise hollow axial bodies and respective ropes (413, 423) are provided on the sliding bar sets (41, 42), central portions of said ropes being wound around the hollow axial bodies of the information carriers while the ends thereof are attached to the sliding bar sets for fixing so that the optic grids are driven to rotate by the movement of the sliding bar sets.

10. A cursor controlling device according to any one of the preceding claims, characterised in that the information carriers (21, 22) comprise optic grids, said reading set is an optic sensing set (3), bright and dark lattices are installed on each of the information carriers at different circumferences and at least an optic grid is transparent, and each optic sensing set has a receiving portion (312, 322) and an illuminating portion (311, 321) installed on the upper and lower sides of the case, respectively, each of the optic sensing sets corresponding to optic grids of different bright and dark lattices for reading a message thereon.

11. A cursor controlling device according to claim 10, characterised in that the case (1) has a rectangular shape and the sensing sets (3) are installed at opposite corners of said case.

12. A cursor controlling device according to any one of claims 1 to 5, characterised in that the information carriers are installed with one of optic grid pieces, magnetic discs, magnetic tapes, optical discs, touch pads, optical shift reflectors or a combination of said media to match therewith.

13. A cursor controlling device according to any one of the preceding claims, characterised in that the device is installed on a keyboard, remote controller, the operating panel of a notebook computer or a mouse.

14. A method of controlling the movement and positioning of a cursor on a computer display utilising the cursor controlling device claimed in any one of the preceding claims, characterised in that the case (1) constitutes a finger controllable element and at least one information carrier (21) and respective reading set (3) are arranged to generate the signals "0" and "1" to read the moving information of the finger controllable element; at least one register being provided to preset the information carrier to generate the value of "0" and "1", said method having a first operating mode to detect the movement of said finger controllable element and to cause the cursor to move respectively on the display and a second operating mode in which an enlarged virtual pointer area is created so that when the finger controllable element is moved into this enlarged area, it may be converted into the operation of instructions so that at least a bidirectional movement containing scrolling of the display is performed.

15. A cursor controlling method according to claim 14, characterised in that, when the finger controllable element is moved into the second operating mode, at least one specified instruction may be performed, one of which is automatically converted to scroll the control rod of the display screen, and the other is converted into an operation of fastly arriving at the boundary of the display screen.

16. A cursor controlling method according to claim 15, characterised in that reduced boundaries are installed on the light and dark lattices of the information carriers for separating the two operating modes, in the first operating mode, the finger controllable element being moved on the boundaries and in the second operating mode, the finger controllable element being moved over the boundaries.

17. A cursor controlling method according to claim 16, characterised in that said optic grid pieces are used as spacing boundaries of said second operating mode and are positioned on the same side of the bright and dark lattices.

18. A cursor controlling method according to any one of claims 15 to 17, characterised in that if said finger controllable element reads the boundary of X axis and Y axis and is in the second operating mode, then the operation is converted into the operation of fast arriving at a boundary, if the finger controllable element has only read one axis boundary signal and is in the second operating mode, then the finger controllable element performs the movement of scrolling the control rod, if the finger controllable element is entered into the boundary from the X axis, then it is in the operation of scrolling the Y axis, and if the finger controllable element is entered into the boundary from the Y axis, then the finger controllable element performs the operation of scrolling the X axis.

19. A cursor controlling method according to claim 18, characterised in that if the finger controllable element is entered into the second operating mode from the upper, lower, left and right sides, then the operation is converted into the movement of scrolling control rods.

20. A cursor controlling method according to claim 17, characterised in that if the finger controllable element is entered into the second operating mode from the upper, lower, left and right sides, it is always located at the centre of the current display, and if the finger controllable element has entered into the second operating mode and then is moved nearly vertically, then the operation is shifted away from the centre and the screen begins to scroll.

# FIG. 1
# PRIOR ART

# FIG. 2

FIG. 3

FIG. 4

FIG. 5A

FIG. 5B

FIG. 6

FIG. 7

FIG. 8

# FIG. 9

FIG. 10

FIG. 11

FIG. 12

EP 0 898 242 A1

FIG. 13

FIG. 14

FIG. 15

```
                          ┌────────┐
                          │ Start  │
                          └────────┘
                              │
          ┌───────────────────────────────────────┐
          │ Set the transmisson rate,stare         │
          │ bit,end bit,and data length of         │
          │ the communication port RS232           │
          └───────────────────────────────────────┘
                              │
  ┌───────────────────────────────────────────────────────────┐
  │ pointer register of diploy is set to zero                  │
  │ X+Flag,X—Flag,XmaxFlag,XminFlag,                           │
  │ V1X1+reg=0,V2X2+reg=0,V1X1—reg=C1,V2X2—reg=C2              │
  │ V1Y1+reg=0,V2Y2+reg=0,V1Y1—reg=C1,V2Y2—reg=C2             │
  └───────────────────────────────────────────────────────────┘
                              │                    ──(C1)──
  ┌───────────────────────────────────────────────────────────┐
  │ Read the digital value of the phase                        │
  │ signals XA,XB,YA,YB and find out                           │
  │ corresonding value of the X+,X— dirction                   │
  │ Xmax,Xmin,Y+,Y— directions,Ymax and Ymin from the state    │
  │ table,and then store the values                            │
  └───────────────────────────────────────────────────────────┘
```

X—axis mode

ReadXA,XB,YA,YB

the present state is equal to the previcus state?    Y

the previous state is equal to 0,0    Y    XA and XB are equal to X+reg    N    XA and XB are equai to X—reg

XA,XB are equal to 1,1    N

the associate flag of X+Flag is set    Y

Reset Xmin Flag
Set X+ Flag
Set RS232
Set the count in X+
direction=count+1

Set RS232
Set the count in X+
direction=max value
set Xmax Flag
Set X+ Flag

# FIG. 16A

FIG. 16B

Ⓟ

Ⓕ

H1    H2    Ⓒ Ⓟ

Y

Ⓡ    Ⓢ Y    Ⓒ

the previous state is equal to 0,1 —Y→ XA and AB are equal to X+reg —N→ XA and XB are equal to X-reg —N→

N

Y-axis mode

Z-axis mode

Ⓒ

# FIG. 16C

Timer interrupts 10/s

Xmax=1 ——→ Set RS232 X+1 conut

Xmin=1 ——→ Set RS232 X-1 conut

Y-axis mode

Z-axis mode

Return interrup

# FIG. 16F

Ⓢ

VX≤V1

N     Y

Ⓕ     Ⓓ ← N     VX≤V2

Y     V1X1+reg
≥C1

N

K2•V2X2+
reg<K3     Y

N

V2X2+reg
≥C2     Y

V2X2-reg
≥C2     Y

N     N

V1X1+reg
≥C1/2     N

Y

Set RS232
output the value of X- direction
and set X+Flag
V1X1+reg=-1,V1X1-reg=+1
count=K1•V1+reg+K2•V2X2+reg

Set RS232
output the value of X- direction
and set X+Flag
V2X2+reg=-1,V2X2-reg=+1
count=K1•V1+reg+K2•V2X2+reg

Set RS232
output the value of X- direction
and set X+Flag
V1X1+reg=+1,V2X2+reg=-2
V1X1-reg=-1,V2X2-reg=+2
count=K1•V1X1+reg+K2•V2X2+reg

FIG. 16D     Ⓒ

FIG. 16E

FIG. 16G

FIG. 16H

Start

clear all flags
and registers

©

Read XA,XB,XC,XD
Store RXA,RXB,RXC,RXD

Read XA,XB,XC,XD

XA=RXA
XB=RXB — Y

N

XB=RXA — N — Reset X+Flag

Y

Set X+Flag

©

associated
flags are
set? — Y — XB=XD — N — associated
flags are
set? — Y — ©

Reset
Xmin Flag

©

N

Set Xmin Flag
count=0

©

XC=XA — N — associated
flags are
set? — Y — ©

Y

N

H2 — N — associated
flags are
set? — N — associated
flags are
set? — Y

Y

N

Set
Xmax Flag
count=maxvalue

H1

Reset
Xmax Flag

©

©

FIG. 16I

FIG. 17A

XA 0010011    01100111
XB 0011001    00110111

$\overleftarrow{Xmin}$    $\overrightarrow{Xmax}$

FIG. 17B

C

Reset Y scroll Flag ←N— within the range of Y axis —Y→ whether Y scrolling Flag has been set —N→ set Y scroll Flag

C1

C1

C1 ←Y— whether it is equal to the uppermost ←— quickly to front page

C1 ←Y— whether it is equal to the lowermost ←— quickly to last page

N— whether the downward Flag has been set —Y→ whether the cursor is upward —N→ whether the upward Flag has been set

set upward Flag

set Y scroll position stop to scroll downwards and set upward Flag

set Y scroll position stop to scroll upwards and set downward Flag

set downward Flag

C1 ←N— displacement of Y scrolling >5

C1

C1

C1 ←N— displacement of Y scrolling >5

N— displacement of Y scrolling >10

perform slow scrolling operation

C1

perform quick scrolling or change page

C1

C1 ←N— displacement of Y scrolling >10 —Y→ ... perform the operation of moving downwards slowly ←N

C1 ←— perform the operation of quick scrolling or page change ←Y

C1

# FIG. 18

**European Patent Office**

**EUROPEAN SEARCH REPORT**

Application Number

EP 97 30 6205

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | DE 196 42 801 A (CHEN, MEI-YUNG, TAIPEH)<br><br>* page 5, line 19 - line 39 *<br>* page 9, line 59 - page 10, line 5 *<br>* page 10, line 32 - line 39; figures 4,5,7,22A,22C *<br>--- | 1-3, 10-14 | G06K11/18<br>G06K11/08 |
| A | DE 296 21 784 U (CHEN, MEI-YUN, TAIPEH)<br><br>* the whole document *<br>--- | 1-3, 12-14 | |
| D,A | US 4 782 327 A (V. B. KLEY ET AL.)<br><br>* column 4, line 52 - column 8, line 57; figures 1-3,5 *<br>--- | 1-3, 12-14 | |
| D,A | US 4 935 728 A (V. B. KLEY ET AL.)<br><br>* column 3, line 65 - column 6, line 23; figures 1-7 *<br>--- | 1-3, 12-14 | |
| A | EP 0 482 420 A (CHERRY MIKROSCHALTER GMBH)<br><br>* the whole document *<br>--- | 1-3, 10-14 | **TECHNICAL FIELDS SEARCHED** (Int.Cl.6)<br><br>G06K |
| A | US 5 293 158 A (M. SOMA)<br><br>* column 3, line 50 - column 6, line 15; figures 1,3 *<br>----- | 1-3, 12-14 | |

The present search report has been drawn up for all claims

| Place of search | Date of completion of the search | Examiner |
|---|---|---|
| BERLIN | 5 January 1998 | Ducreau, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&: member of the same patent family, corresponding document

EPO FORM 1503 03.82 (P04C01)